(19) Europäisches Patentamt
European Patent Office
Office européen des brevets

(11) **EP 1 930 153 B1**

(12) **EUROPEAN PATENT SPECIFICATION**

(45) Date of publication and mention
of the grant of the patent:
**12.09.2012 Bulletin 2012/37**

(51) Int Cl.:
*C03C 17/32* (2006.01)   *B65D 65/40* (2006.01)
*C08J 7/04* (2006.01)

(21) Application number: **06810516.2**

(22) Date of filing: **25.09.2006**

(86) International application number:
**PCT/JP2006/318948**

(87) International publication number:
**WO 2007/034940 (29.03.2007 Gazette 2007/13)**

(54) **GAS BARRIER LAMINATE**

GAS-BARRIERE-LAMINAT

STRATIFIE BARRIERE AUX GAS

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.09.2005 JP 2005277924**
**02.08.2006 JP 2006211066**

(43) Date of publication of application:
**11.06.2008 Bulletin 2008/24**

(73) Proprietors:
• **UNITIKA LTD.**
**Amagasaki-shi**
**Hyogo 660-0824 (JP)**
• **TOYO INK MANUFACTURING CO., LTD.**
**Tokyo 104-0031 (JP)**

(72) Inventors:
• **OKUZU, Takayoshi c/o Unitika Ltd.,**
**Uji-shi, Kyoto 611-0021 (JP)**
• **KUWATA, Hideki c/o Unitika Ltd.,**
**Uji-shi, Kyoto 611-0021 (JP)**

• **MIYAKE, Munehiro c/o Unitika Ltd.,**
**Uji-shi, Kyoto 611-0021 (JP)**
• **YOSHIDA, Mitsuo c/o Toyo Ink Mfg. Co., Ltd**
**Chuo-ku, Tokyo (JP)**
• **OKAMOTO, Junji c/o Toyo Ink Mfg. Co., Ltd**
**Chuo-ku, Tokyo (JP)**
• **OZAKI, Kunihiko c/o Toyo Ink Mfg. Co., Ltd**
**Chuo-ku, Tokyo (JP)**
• **KAMOSHITA, Miyuki c/o Toyo Ink Mfg. Co., Ltd**
**Chuo-ku, Tokyo (JP)**
• **UENO, Reiko c/o Toyo Ink Mfg. Co., Ltd**
**Chuo-ku, Tokyo (JP)**

(74) Representative: **Bauch-Koepe, Katharina Anna**
**Postfach 22 12 64**
**80502 München (DE)**

(56) References cited:
**EP-A- 1 086 981    EP-A- 1 548 074**
**JP-A- 2000 000 931    JP-A- 2004 136 281**
**JP-A- 2004 315 586    JP-A- 2004 322 625**
**US-A1- 2003 124 365**

**Description**

TECHNICAL FIELD

The present invention relates to a gas barrier laminate that exhibits excellent gas barrier properties even under conditions of high humidity.

BACKGROUND ART

Thermoplastic resin films such as polyamide films and polyester films have excellent strength, transparency and moldability, and are consequently widely used as packaging materials. However, because these thermoplastic resin films also exhibit reasonably high levels of permeability to gases such as oxygen, if this type of thermoplastic resin film is used for packaging general foodstuffs, retort foods, cosmetics, medical supplies, or agricultural chemicals or the like, then during long-term storage, gases such as oxygen can permeate through the film, causing deterioration of the package contents.
As a result, laminated films produced by coating the surface of a thermoplastic resin with an emulsion or the like of polyvinylidene chloride (hereafter abbreviated as PVDC), thereby forming a PVDC layer with good gas barrier properties, are widely used for applications such as food packaging. However, PVDC generates organic substances such as acidic gases on incineration, and with recent advances in environmental awareness, there is considerable demand for replacing PVDC with other materials.
One example of an alternative material to PVDC is polyvinyl alcohol (hereafter abbreviated as PVA), which does not generate toxic gases, and exhibits excellent gas barrier properties under low humidity conditions. However, as the humidity increases, the gas barrier property declines rapidly, so that in most cases, PVA films cannot be used for wrapping foods that contain moisture.
One example of a polymer known to improve upon the deterioration in gas barrier properties seen for PVA under high humidity conditions is a copolymer of vinyl alcohol and ethylene (hereafter abbreviated as EVOH). However, in order to ensure that the gas barrier property is maintained at a practical level under high humidity, the proportion of ethylene within the copolymer must be increased to a certain level, but the resulting polymer becomes difficult to dissolve in water. Accordingly, in order to produce a coating agent using EVOH with a high ethylene ratio within the copolymer, either an organic solvent, or a mixed solvent of water and an organic solvent must be used. However the use of organic solvents is undesirable from an environmental perspective, and also results in increased costs due to the necessity of providing a process for recovering the organic solvent.
Examples of methods that have been proposed for coating a film with a liquid composition comprising a water-soluble polymer in order to achieve favorable gas barrier properties even under conditions of high humidity include methods in which an aqueous solution comprising PVA and a partially neutralized product of polyacrylic acid or polymethacrylic acid is coated onto a film, and a heat treatment is then conducted to effect cross-linking via ester linkages between the two polymers (see patent references 1 to 7). However, in the methods proposed in these references, either a high-temperature heat treatment or a heat treatment over an extended period is required to achieve favorable gas barrier properties, and because large quantities of energy are therefore required during production, the impact on the environment is not insignificant. Moreover, if a high-temperature heat treatment is employed, then not only is there an increased danger of color changes or decomposition of the PVA and the like that constitute the gas barrier layer, but deformation such as wrinkling can occur in the plastic film substrate or the like to which the gas barrier layer is laminated, meaning the product cannot be used as a packaging material. In order to prevent deterioration of the plastic substrate, a special heat-resistant film that is capable of withstanding the high-temperature heat treatment must be used as the substrate, but this creates problems of practicality and economic viability. On the other hand, if the temperature of the heat treatment is lowered, then treatment must be conducted over an extremely long period, causing a deterioration in productivity.
Furthermore, investigations are also being conducted into resolving the above problems associated with PVA film by introducing cross-linking structures into the PVA. However, although the humidity dependence of the oxygen gas barrier property of PVA film typically decreases with increasing cross-linking density, the inherent oxygen gas barrier property of the PVA film under dry conditions tends to deteriorate, meaning it is extremely difficult to achieve a favorable oxygen gas barrier property under high humidity conditions. Cross-linking of polymer molecules generally improves the water resistance, but the gas barrier property describes the ability of the material to prevent the penetration or diffusion of comparatively small molecules such as oxygen, and a favorable gas barrier property can not always be achieved simply by cross-linking the polymer. For example, three dimensional cross-linked polymers such as epoxy resins and phenolic resins do not exhibit effective gas barrier properties.
Methods have also been proposed which, although using a water-soluble polymer such as PVA, are capable of providing gas barrier laminates with favorable gas barrier properties even under high humidity, by conducting heat treatments at lower temperatures or for shorter time periods than those conventionally used (see patent references 8 to 10).

Although using water-soluble polymers, the gas barrier layer-forming coating materials disclosed in the patent references 8 to 10 are able to form gas barrier laminates with superior gas barrier properties to those conventionally obtained, by conducting heating at lower temperatures or for shorter time periods than those employed for the coating agents disclosed in the patent references 1 to 7. However, with the methods disclosed in the patent references 8 to 10, in which an esterification reaction is conducted between the hydroxyl groups of PVA and the COOH groups within an ethylene-maleic acid copolymer, or in which metal cross-linking structures are introduced, there is a limit to the degree of improvement than can be achieved in the gas barrier property under high humidity.

As a result, other methods have been proposed that improve on the above techniques in order to achieve even better gas barrier properties (see patent references 11 to 14). These references disclose that, by heat treating a gas barrier coating material comprising PVA and a composition prepared by partially neutralizing an ethylene-maleic acid copolymer with a specific metal salt, a gas barrier coating can be obtained that is superior to those disclosed in the patent references 8 to 10, and that by heat treating the thus obtained gas barrier coating in the presence of water, or in the presence of water comprising a specific metal ion, an even more superior gas barrier coating can be obtained. Examples of the method used for conducting the heat treatment in the presence of water (or water comprising a specific metal ion) include immersion in hot water, hot water spraying, storage under high humidity conditions, and steam heating, wherein the treatment temperature is preferably not less than 90°C, and the treatment time is preferably not less than 1 minute.

However, in these types of methods, because the film with the gas barrier layer coated thereon must be in contact with water for a comparatively long time, the production process can be expected to be more complex, and the productivity is expected to worsen. Moreover, the effects of heat and water absorption on the film during the treatment step are considerable, meaning that, for example, in those cases where a highly water-absorbent film such as a polyamide is used as the substrate, adverse effects on the product quality such as deformation and curling are a concern.

As described above, although there are increasing demands for further improvements in the gas barrier properties under conditions of high humidity, obtaining a high-quality gas barrier laminate with superior performance in an industrially efficient manner has proven difficult with the conventional technology.

European Patent Application EP 1 086 981 A1 discloses gas-barrier films which are produced through applying a metallic compound to a surface of a processed polymer layer and a laminated gas-barrier film either surface of which is laminated on with a plastic film.

European Patent Application EP 1 548 074 A2 discloses a gas barrier coating material comprising polyvinyl alcohol, an ethylene-maleic acid polymer and a metal compound. Furthermore is disclosed a gas barrier layer formed from this gas barrier coating material, wherein the gas barrier layer is laminated on top of the plastic substrate.

Japanese Patent Application JP 2004 322625 A discloses a manufacturing method for gas barrier laminate, comprising heat-treating a gas-barrier laminate for forming a gas barrier layer.

US Patent Application US 2003/124365 A1 discloses oxygen barrier coating and coated film. The barrier coating used on an oxygen barrier film includes polyvinyl alcohol and a copolymer of maleic acid and acrylic acid. A method of stripping low molecular weight fractions from the copolymer is also disclosed.

Japanese Patent Application JP 2004 315586 A discloses a manufacturing method of a gas-barrier laminate comprising the application, direct or via an undercoat layer, of a coating (C) for forming a gas-barrier layer comprising a polyalcohol polymer (A) and an olefin-maleic acid copolymer (B) (except the combination of the polyvinyl alcohol and an ethylene-maleic acid copolymer) on a plastic base material, heat-treatment and subsequent heat-treatment in the presence of water.

Japanese Patent Application JP 2004 136281 A (see Patent Reference 13 below) discloses the production of a film and its laminate with preferable oxygen gas barrier properties under a high humidity and under a more moderate condition than that of the conventional method.

(Patent Reference 1) Japanese Patent Laid-Open No. H06-220221
(Patent Reference 2) Japanese Patent Laid-Open No. h07-102083
(Patent Reference 3) Japanese Patent Laid-Open No. H07-205379
(Patent Reference 4) Japanese Patent Laid-Open No. H07-266441
(Patent Reference 5) Japanese Patent Laid-Open No. H08-041218
(Patent Reference 6) Japanese Patent Laid-Open No. H10-237180
(Patent Reference 7) Japanese Patent Laid-Open No. 2000-000931
(Patent Reference 8) Japanese Patent Laid-Open No. 2001-323204
(Patent Reference 9) Japanese Patent Laid-Open No. 2002-020677
(Patent Reference 10) Japanese Patent Laid-Open No. 2002-241671
(Patent Reference 11) Japanese Patent Laid-Open No. 2004-115776
(Patent Reference 12) Japanese Patent Laid-Open No. 2004-137495

(Patent Reference 13) Japanese Patent Laid-Open No. 2004-136281
(Patent Reference 14) Japanese Patent Laid-Open No. 2004-322626

DISCLOSURE OF INVENTION

An object of the present invention is to provide a transparent gas barrier laminate which, although using a water-soluble polymer, exhibits superior gas barrier properties under high humidity than those attainable with conventional technology, and which is able to be produced in an industrially efficient manner, under milder conditions than those conventionally employed.

The inventors of the present invention discovered that by applying a gas barrier coating material with a specific resin composition to a plastic substrate, conducting a heat treatment, and subsequently forming another coating material film with a specific composition as an adjacent layer to the gas barrier coating material, they were able to achieve the object described above, and they were therefore able to complete the present invention.

In other words, the present invention relates to a gas barrier laminate comprising a plastic substrate (I); a gas barrier layer (II) formed from a gas barrier layer-forming coating material (C) containing a polyalcohol-based polymer (A) and a polycarboxylic acid-based polymer (B); and a resin layer (III) formed from a resin coating material (F) containing either a monovalent metal compound (D), or a monovalent metal compound (D) and a bivalent or higher metal compound (E); wherein the gas barrier layer (II) is laminated to the plastic substrate (I), either directly or with an anchor coat layer disposed therebetween, and the resin layer (III) is laminated on top of the gas barrier layer (II), and wherein the polycarboxylic axid-based polymer (B) comprises an olefin-maleic copolymer.

Another aspect of the present invention relates to a packaging material that comprises the gas barrier laminate according to the aspect of the present invention described above.


BEST MODE FOR CARRYING OUT THE INVENTION

A gas barrier laminate according to the present invention (hereafter also referred to as simply "the laminate") comprises a plastic substrate (I); a gas barrier layer (II) formed from a gas barrier layer-forming coating material (C) containing a polyalcohol-based polymer (A) and a polycarboxylic acid-based polymer (B) comprising an olefin-maleic copolymer; and a resin layer (III) formed from a resin coating material (F) containing either a monovalent metal compound (D), or a monovalent metal compound (D) and a bivalent or higher metal compound (E); wherein these layers are laminated in the order (I) (II) (III). The gas barrier layer (II) may be either laminated directly to the plastic substrate (I), or may be laminated to the plastic substrate (I) via an anchor coat layer, as represented by plastic substrate / anchor coat layer / gas barrier layer.

By adopting this type of configuration, a coating (a laminate or film) can be formed that exhibits a superior gas barrier property even under a high humidity environment, and moreover, the gas barrier coating can be formed at favorable productivity levels, by a short heat treatment. In addition, because the coating does not generate toxic gases such as dioxin upon incineration, a gas barrier laminate that does not contaminate the environment can be provided.

The plastic substrate (I) is preferably a film-like substrate produced from a heat-moldable thermoplastic resin using a technique such as extrusion molding, injection molding, blow molding, stretch blow molding, or draw molding, although a substrate that has been molded into the shape of a container such as a bottle, a cup, or a tray is also suitable. This plastic substrate (I) may comprise either a single layer, or a plurality of layers produced by simultaneous melt extrusion or some other lamination process.

Examples of the thermoplastic resin used for forming the plastic substrate (I) include olefin-based copolymers, polyesters, polyamides, styrene-based copolymers, vinyl chloride-based copolymers, acrylic copolymers and polycarbonates, and of these, olefin-based copolymers, polyesters and polyamides are preferred.

Examples of olefin-based copolymers include low-, medium-, and high-density polyethylene, linear low-density polyethylene, polypropylene, ethylene-propylene copolymers, ethylene-butene copolymers, ionomers, ethylene-vinyl acetate copolymers, and ethylene-vinyl alcohol copolymers;

examples of polyesters include polylactic acid, polyethylene terephthalate, polybutylene terephthalate, polyethylene terephthalate/isophthalate, polytrimethylene terephthalate, polyethylene naphthalate and polybutylene naphthalate;

examples of polyamides include nylon 6, nylon 6,6, nylon 6,10, nylon 4,6 and meta-xylylene adipamide;

examples of styrene-based copolymers include polystyrene, styrene-butadiene block copolymers, styrene-acrylonitrile copolymers, and styrene-butadiene-acrylonitrile copolymers (ABS resins);

examples of vinyl chloride-based copolymers include polyvinyl chloride and vinyl chloride-vinyl acetate copolymers; and

examples of acrylic copolymers include polymethylmethacrylate and methyl methacrylate-ethyl acrylate copolymers.

These thermoplastic resins may be used either alone, or in mixtures of two or more different resins.

Preferred thermoplastic resins include polyamide resins such as nylon 6, nylon 66 and nylon 46; aromatic polyester resins such as polyethylene terephthalate, polyethylene naphthalate, polytrimethylene terephthalate, polybutylene terephthalate and polybutylene naphthalate; aliphatic polyester resins such as polylactic acid; polyolefin resins such as polypropylene and polyethylene; and mixtures thereof.

If required, the above heat-moldable thermoplastic resin may also contain either one, or two or more additives such as pigments, antioxidants, antistatic agents, ultraviolet absorbers, lubricants or preservatives, which can be added in a combined quantity within a range from 0.001 to 5.0 parts by mass per 100 parts by mass of the resin.

Furthermore, in those cases where, as described below, the gas barrier laminate according to the present invention is used for forming a packaging material, in order to ensure adequate strength as a packaging material, any of the various reinforced plastics can be used as the plastic substrate (I) used for forming the gas barrier laminate. In other words, either one, or two or more reinforcing fibers such as glass fiber, aromatic polyamide fiber, carbon fiber, pulp, or cotton linter; powdered reinforcing materials such as carbon black or white carbon; or flake-like reinforcing materials such as glass flakes or aluminum flakes can be blended into the thermoplastic resin in a combined quantity within a range from 2 to 150 parts by mass per 100 parts by mass of the thermoplastic resin.

In order to increase the weight, either one, or two or more extenders such as heavy or light calcium carbonate, mica, talc, kaolin, gypsum, clay, barium sulfate, alumina powder, silica powder, or magnesium carbonate may also be blended into the resin using conventional methods, in a combined quantity within a range from 5 to 100 parts by mass per 100 parts by mass of the thermoplastic resin.

In addition, in order to further improve the gas barrier properties, scaly fine inorganic powders such as water-swelling mica or clay may also be blended into the resin using conventional methods, in a combined quantity within a range from 5 to 100 parts by mass per 100 parts by mass of the thermoplastic resin.

The gas barrier layer (II) is formed from the gas barrier layer-forming coating material (C) containing the polyalcohol-based polymer (A) and the polycarboxylic acid-based polymer (B) which comprises an olefin-maleic copolymer. By applying this gas barrier layer-forming coating material (C) to the surface of the plastic substrate (I) and then conducting a heat treatment, the two components (A) and (B) undergo cross-linking via ester linkages, forming a gas barrier layer having a dense, cross-linked structure.

The relative blend proportions of the polyalcohol-based polymer (A) and the polycarboxylic acid-based polymer (B) are set such that the molar ratio between OH groups and COOH groups (OH groups / COOH groups) is preferably within a range from 0.01 to 20, even more preferably from 0.01 to 10, even more preferably from 0.02 to 5, and is most preferably from 0.04 to 2. If the proportion of OH groups is smaller than the above range, then there is a danger of a deterioration in the film-forming performance, whereas if the proportion of COOH groups is smaller than the above range, then there is a danger that a cross-linked structure with an adequate cross-linking density to the polyalcohol-based polymer (A) cannot be formed, and the gas barrier properties under high humidity conditions may not manifest satisfactorily.

From the viewpoint of workability, the gas barrier layer-forming coating material (C) is preferably either an aqueous solution or an aqueous dispersion, and is most preferably an aqueous solution. Accordingly, the polyalcohol-based polymer (A) is preferably water-soluble, and the polycarboxylic acid-based polymer (B) is also preferably water-soluble.

The polyalcohol-based polymer (A) is an alcohol-based polymer containing two or more hydroxyl groups within each molecule, preferred examples of which include polyvinyl alcohol, copolymers of ethylene and vinyl alcohol, and sugars.

The saponification degree within the polyvinyl alcohol or copolymer of ethylene and vinyl alcohol is preferably not less than 95 mol%, and is even more preferably 98 mol% or greater, whereas the average polymerization degree is preferably within a range from 50 to 4,000, and is even more preferably from 200 to 3,000.

Examples of sugars that may be used include monosaccharides, oligosaccharides and polysaccharides. These sugars also include sugar alcohols and the various substituted forms or derivatives thereof, and cyclic oligosaccharides such as cyclodextrin. These sugars are preferably soluble in water.

Examples of starches, which are included within the above polysaccharides, include raw starches (unmodified starches) such as wheat starch, corn starch, waxy corn starch, potato starch, tapioca starch, rice starch, ocarina starch and sago starch, as well as all manner of processed starches. Examples of processed starches include physically modified starches, enzymatically modified starches, starches modified by chemical decomposition, chemically modified starches, and grafted starches in which a monomer is graft polymerized to a starch. Of these starches, water-soluble processed starches such as roasted dextrin and glycosylated products of reduced starches in which the reducing terminals have been alcoholized are preferred. The starch may also be in the form of a hydrate. These starches may be used either alone, or in combinations of two or more different materials.

The aforementioned polyalcohol-based polymer (A) may use either a single compound, or a combination of two or more different compounds.

The polycarboxylic acid-based polymer (B) is a polymer (BP) containing carboxyl groups or acid anhydride groups, obtained by polymerizing a monomer (BM) containing a carboxyl group or acid anhydride group and an ethylenic unsaturated double bond. The monomer (BM) preferably contains an acryloyl group or methacryloyl group (hereafter, these groups are referred to jointly as a (meth)acryloyl group) as the ethylenic unsaturated double bond. Examples of the monomer include (meth)acrylic acid, 2-carboxyethyl (meth)acrylate, ω-carboxy-polycaprolactone mono(meth)acrylate, maleic acid, maleic anhydride, fumaric acid, fumaric anhydride, citraconic acid, citraconic anhydride, itaconic acid, and itaconic anhydride. Of these, (meth)acrylic acid, maleic acid, maleic anhydride, itaconic acid and itaconic anhydride are preferred.

These monomers may be used alone or in combinations of two or more different monomers, or may also be used in a combination with another monomer. In other words, examples of the polymer (BP) obtained by polymerizing the monomer (BM) include homopolymers (BP1) obtained by polymerization of any one of the monomers (BM), copolymers (BP2) obtained by copolymerization of a plurality of the monomers (BM), and copolymers (BP3) obtained by copolymerization of a monomer (BM) and another monomer.

Examples of other monomers that can be copolymerized with the monomer (BM) include any monomer that does not contain a carboxyl group or hydroxyl group, but is able to undergo copolymerization with the monomer (BM). Examples include esterified products of unsaturated monocarboxylic acids such as crotonic acid or (meth)acrylic acid that do not contain a hydroxyl group or carboxyl group, (meth)acrylamide, (meth)acrylonitrile, styrene, styrenesulfonic acid, vinyltoluene, α-olefins of 2 to 30 carbon atoms such as ethylene, alkyl vinyl ethers, and vinylpyrrolidone. These other monomers may be used either alone, or in combinations of two or more different monomers.

The coating material (C) may include arbitrary combinations of homopolymers (BP1), copolymers of BM monomers (BP2), and copolymers of a BM monomer and another monomer (BP3), and for example, may include two or more homopolymers (BP1), two or more copolymers (BP2), or two or more copolymers (BP3). Alternatively, other combinations such as a homopolymer (BP1) and a copolymer (BP2), a homopolymer (BP1) and a copolymer (BP3), a copolymer (BP2) and a copolymer (BP3), or a homopolymer (BP1), a copolymer (BP2) and a copolymer (BP3) may also be used.

One example of a polymer (BP) that can be used favorably is an olefin-maleic acid copolymer, and an ethylene-maleic acid copolymer (hereafter abbreviated as "EMA") is particularly desirable. This EMA can be obtained by copolymerization of maleic anhydride and ethylene, using known methods such as a solution radical polymerization.

The maleic acid units in EMA tend to form maleic anhydride structures under dry conditions via a cyclodehydration of adjacent carboxyl groups, but then undergo ring opening to form maleic acid structures under humid conditions or within an aqueous solution. Accordingly, unless stated otherwise, the combination of maleic acid units and maleic anhydride units is referred to generically using the term maleic acid units. The maleic acid units in the EMA preferably represent not less than 5 mol%, even more preferably 10 mol% or greater, even more preferably 15 mol% or greater, and most preferably 30 mol% or greater.

The weight average molecular weight of the EMA is preferably within a range from 1,000 to 1,000,000, even more preferably from 3,000 to 500,000, even more preferably from 7,000 to 300,000, and is most preferably from 10,000 to 200,000.

The polycarboxylic acid-based polymer (B) may use either a single polymer, or a combination of two or more different polymers.

In order to promote the cross-linking reaction between the polyalcohol-based polymer (A) and the polycarboxylic acid-based polymer (B), and improve the gas barrier properties, a cross-linking agent may be added to the gas barrier layer-forming coating material (C).

The quantity added of the cross-linking agent is preferably within a range from 0.1 to 30 parts by mass, and even more preferably from 1 to 20 parts by mass, per 100 parts by mass of the combination of the polyalcohol-based polymer (A) and the polycarboxylic acid-based polymer (B). If the quantity added of the cross-linking agent is less than 0.1 parts by mass, then the addition of the cross-linking agent yields no marked cross-linking effect compared with the case where no cross-linking agent is added, whereas if the quantity exceeds 30 parts by mass, then the cross-linking agent may actually impede the development of gas barrier properties, both of which are undesirable.

The above cross-linking agent may be a cross-linking agent with self cross-linking properties, a compound that contains a plurality of functional groups within each molecule capable of reacting with carboxyl groups and/or hydroxyl groups, or a metal complex with polyvalent coordination sites. Of these, isocyanate compounds, melamine compounds, urea compounds, epoxy compounds, carbodiimide compounds and zirconium salt compounds and the like are preferred, as they yield superior gas barrier properties. A plurality of these cross-linking agents may also be used in combination.

Alternatively, a catalyst such as an acid may be added to the coating material (C) in order to accelerate the cross-linking reaction and improve the gas barrier properties.

Adding a cross-linking agent or a catalyst accelerates the cross-linking reaction that occurs via the formation of ester linkages between the polyalcohol-based polymer (A) and the polycarboxylic acid-based polymer (B), and is therefore able to further improve the gas barrier properties of the resulting gas barrier layer (II).

Moreover, additives such as heat stabilizers, antioxidants, reinforcing materials, pigments, age resistors, weatherproofing agents, flame retardants, plasticizers, release agents and lubricants may also be added to the gas barrier layer-forming coating material (C), provided such addition does not significantly impair the characteristics of the coating material.

Examples of the above heat stabilizers, antioxidants and age resistors include hindered phenols, phosphorus compounds, hindered amines, sulfur compounds, copper compounds, alkali metal halides, and mixtures thereof

Examples of reinforcing materials include clay, talc, calcium carbonate, zinc carbonate, wollastonite, silica, alumina, magnesium oxide, calcium silicate, sodium aluminate, sodium aluminosilicate, magnesium silicate, glass balloons, carbon black, zinc oxide, zeolite, hydrotalcite, metal fibers, metal whiskers, ceramic whiskers, potassium titanate whiskers, boron nitride, graphite, glass fiber, and carbon fiber.

In addition, an inorganic layered compound may also be added to the gas barrier layer-forming coating material (C) in order to further improve the gas barrier properties, provided such addition does not significantly impair the characteristics of the coating material. Here, the term "inorganic layered compound" refers to an inorganic compound in which unit crystal layers are superimposed to form a layered structure. Specific examples include zirconium phosphate (a phosphate-based derivative compound), chalcogenides, lithium-aluminum composite hydroxides, graphite, and clay minerals. Compounds that swell and undergo cleavage within solvents are preferred.

Examples of preferred clay minerals include montmorillonite, beidellite, saponite, hectorite, sauconite, vermiculite, fluoromica, muscovite, paragonite, phlogopite, biotite, lepidolite, margarite, clintonite, anandite, chlorite, donbassite, sudoite, cookeite, clinochlore, chamosite, nimite, tetrasilylic mica, talc, pyrophyllite, nacrite, kaolinite, halloysite, chrysotile, sodium taeniolite, xanthophyllite, antigorite, dickite, and hydrotalcite, and of these, swelling fluoromica or montmorillonite are particularly preferred.

These clay minerals may be naturally formed materials, artificially synthesized or modified materials, or compounds that have been treated with organic materials such as onium salts.

Of the above clay minerals, a swelling fluoromica-based mineral is the most preferred compound in terms of its degree of whiteness, and such minerals can be represented by the formula (1) shown below, and can be readily synthesized.

$$\alpha(MF)\cdot\beta(aMgF_2\cdot bMgO)\cdot\gamma SiO_2 \qquad (1)$$

(In the formula, M represents sodium or lithium, and $\alpha$, $\beta$, $\gamma$, a, and b each represent a coefficient, wherein $0.1 \le \alpha \le 2$, $2 \le \beta \le 3.5$, $3 \le \gamma \le 4$, $0 \le a \le 1$, $0 \le b \le 1$, and a+b = 1.)

One method of producing this type of swelling fluoromica-based mineral is a socalled melt method, wherein silicon oxide, magnesium oxide, and various fluorides are mixed together, the resulting mixture is heated at 1,400 to 1,500°C in an electric or gas oven until the components have completely melted, and crystals of the fluoromica-based mineral are then grown within the reaction vessel during the cooling process.

An alternative method uses talc as a starting material, and involves intercalating alkali metal ions within the talc to generate a swelling fluoromica-based mineral (Japanese Patent Laid-Open No. H02-149415). In this method, the talc is mixed with an alkali silicofluoride or an alkali fluoride, and the mixture is then subjected to a short heat treatment in a magnetic crucible at a temperature of approximately 700 to 1,200°C, thereby yielding the swelling fluoromica-based mineral.

In this method, from the viewpoint of achieving a favorable production yield for the swelling fluoromica-based mineral, the quantity of the alkali silicofluoride or alkali fluoride mixed with the talc preferably represents 10 to 35% by mass of the resulting mixture.

In order to enable the above swelling fluoromica-based mineral to be obtained, the alkali metal of the alkali silicofluoride or alkali fluoride must be either sodium or lithium. These alkali metals may be used either alone, or in combination. Of the alkali metals, if potassium is used alone, then a swelling fluoromica-based mineral cannot be obtained, although potassium can be used in limited quantities in combination with either sodium or lithium, for the purpose of regulating the swelling characteristics.

In addition, a small quantity of alumina may also be added during production of the swelling fluoromica-based mineral to regulate the swelling characteristics of the produced swelling fluoromica-based mineral. Of the above clay minerals, montmorillonite is represented by a formula (2) shown below, and can be obtained by purifying naturally occurring material.

$$M_aSi_4(Al_{2-a}Mg_a)O_{10}(OH)_2\cdot nH_2O \qquad (2)$$

(In the formula, M represents a sodium cation, and a represents a number within a range from 0.25 to 0.60. Furthermore, the number of water molecules bonded to the interlayer ion exchange cations varies depending on the nature of the cations and conditions such as the humidity, and this variability is expressed by the $nH_2O$ in the formula.)

Montmorillonite also includes the homoionic substituted materials of magnesian montmorillonite (3), iron montmorillonite (4), and iron magnesian montmorillonite (5), as represented by the group of formulas (3) to (5) shown below, and these materials may also be used.

$$M_aSi_4(Al_{1.67-a}Mg_{0.5+a})O_{10}(OH)_2 \cdot nH_2O \qquad (3)$$

$$M_aSi_4(Fe_{2-a}^{3+}Mg_a)O_{10}(OH)_2 \cdot nH_2O \qquad (4)$$

$$M_aSi_4(Fe_{1.67-a}^{3+}Mg_{0.5+a})O_{10}(OH)_2 \cdot nH_2O \qquad (5)$$

(In the formulas, M represents a sodium cation, and a represents a number within a range from 0.25 to 0.60.)

Normally, montmorillonite contains ion exchange cations such as sodium or calcium between the layers of the material, but the quantity of these cations varies depending on the location from which the material is sourced. In the present invention, a montmorillonite in which an ion exchange process or the like has been used to substitute these interlayer ion exchange cations with sodium is preferred. Furthermore, the use of montmorillonite that has been purified by water treatment is also preferred.

These types of inorganic layered compounds may also be added to the gas barrier layer-forming coating material (C) in combination with the aforementioned cross-linking agent.

When mixing the polyalcohol-based polymer (A) and the polycarboxylic acid-based polymer (B) to prepare an aqueous solution containing the two components that is then used as the coating material (C), an alkali compound is preferably added in sufficient quantity to provide from 0.1 to 20% equivalence relative to the carboxyl groups within the polycarboxylic acid-based polymer (B).

If the polycarboxylic acid-based polymer (B) contains a large quantity of carboxylic acid units, then the hydrophilicity of the polymer itself is high, and an aqueous solution can be formed without the addition of an alkali compound, but by adding an appropriate quantity of an alkali compound, the gas barrier properties of the film obtained by applying the gas barrier layer-forming coating material (C) can be improved markedly.

The alkali compound may be any compound capable of neutralizing the carboxyl groups within the polycarboxylic acid-based polymer (B), and examples include the hydroxides of alkali metals and alkaline earth metals, as well as ammonium hydroxide and organic ammonium hydroxides. Of these, alkali metal hydroxides are preferred.

The method used for preparing the above aqueous solution may be a conventional method that uses a dissolution tank fitted with a stirrer. For example, in a preferred method, aqueous solutions of the polyalcohol-based polymer (A) and the polycarboxylic acid-based polymer (B) are prepared separately, and then mixed together prior to use. In such cases, adding an aforementioned alkali compound to the aqueous solution of the polycarboxylic acid-based polymer (B) can be used to improve the stability of the aqueous solution.

The polyalcohol-based polymer (A) and the polycarboxylic acid-based polymer (B) may also be added simultaneously to water within a dissolution tank, but adding the alkali compound to the water first improves the solubility of the polycarboxylic acid-based polymer (B).

In order to enhance the solubility of the polycarboxylic acid-based polymer (B) in water, shorten the drying process, and improve the stability of the aqueous solution, a small quantity of an alcohol or organic solvent may be added to the water.

The concentration, namely the solid fraction, of the gas barrier layer-forming coating material (C) can be suitably adjusted in accordance with the specifications of the coating device, and/or the drying and heating device, although if the solution is overly dilute, then forming a thick enough layer (II) to ensure a satisfactory gas barrier property becomes difficult, and the subsequent drying process tends to require a long period of time. In contrast, if the concentration of the coating material is too high, then achieving a homogenous coating material becomes difficult, and coatability problems tend to develop. Considering these factors, the concentration (the solid fraction) of the coating material (C) is preferably within a range from 5 to 50% by mass.

When forming the gas barrier layer (II) from the gas barrier layer-forming coating material (C), the coating material is first applied to the plastic substrate (I) or the anchor coat layer formed on top of the plastic substrate (I). There are no particular restrictions on the coating method used for applying the coating material (C), and typical methods such as gravure roll coating, reverse roll coating, wire bar coating and air knife coating can be used.

An anchor coat layer may be used as required, is positioned between the plastic substrate (I) and the gas barrier layer (II), and has a principal role of improving the adhesion of the gas barrier layer (II).

The coating agent used in the anchor coat layer can use conventional materials without any particular restrictions. Examples include isocyanate-based, polyurethane-based, polyester-based, polyethyleneimine-based, polybutadiene-based, polyolefin-based and alkyl titanate-based anchor coating agents. Of these, in view of achieving superior effects for the present invention, isocyanate-based, polyurethane-based and polyester-based anchor coating agents are preferred. Moreover, mixtures and reaction products of either one, or two or more isocyanate compounds, polyurethanes or urethane prepolymers; mixtures and reaction products of one, or two or more polyesters, polyols or polyethers, and an isocyanate; or solutions or dispersions thereof are preferred.

The coating agent can be applied to the substrate (I) using the same method as the coating method used for the coating material (C).

Following application of the coating material (C), a heat treatment may be conducted immediately, thereby forming a dried coating and conducting a heat treatment simultaneously, or alternatively, the moisture and the like may be evaporated following application to first form a dried coating, by blowing hot air using a dryer or the like, or by irradiating infrared radiation, and a heat treatment then conducted subsequently. In terms of shortening the process, conducting the heat treatment immediately following coating is preferred, provided this does not impair the state of the gas barrier layer (II) or the physical properties such as the gas barrier property. There are no particular restrictions on the heat treatment method, and although conducting the heat treatment in a dry atmosphere such as an oven is considered typical, the heat treatment may also be conducted, for example, by bringing the coating into contact with a heated roller. In those cases where the substrate (I) is a stretched film, during formation of the gas barrier layer (II) from the gas barrier layer-forming coating material (C), either the coating material (C) may be applied to a stretched substrate (I), or the coating material (C) may be applied to the substrate (I) prior to stretching, and film stretching then conducted following coating.

In either of the above cases, by subjecting the plastic substrate (I) with the gas barrier layer-forming coating material (C) coated thereon to a heat treatment of not more than 1 minute within a heated atmosphere of at least 100°C, the polyalcohol-based polymer (A) and the polycarboxylic acid-based polymer (B) contained within the gas barrier layer-forming coating material (C) undergo a cross-linking reaction that forms ester linkages, and as a result of this cross-linking, the water-insoluble gas barrier layer (II) is formed.

The heat treatment conditions are affected by factors such as the ratio between the polyalcohol-based polymer (A) and the polycarboxylic acid-based polymer (B), the existence of other added components, and the quantity of such added components if included, and although it is impossible to generalize regarding the ideal heat treatment temperature for forming the gas barrier layer, the heat treatment is preferably conducted at a temperature within a range from 100 to 300°C, even more preferably from 120 to 250°C, even more preferably from 140 to 240°C, and most preferably from 160 to 220°C. If the heat treatment temperature is too low, then the cross-linking reaction between the polyalcohol-based polymer (A) and the polycarboxylic acid-based polymer (B) may not proceed satisfactorily, making it difficult to obtain a gas barrier layer (II) with satisfactory gas barrier properties, whereas if the temperature is too high, then there is a danger that the coating may become brittle, both of which are undesirable.

The heat treatment time is preferably not longer than 5 minutes, is typically within a range from 1 second to 5 minutes, preferably from 3 seconds to 2 minutes, and even more preferably from 5 seconds to 1 minute. If the heat treatment time is too short, then the above cross-linking reaction may not proceed satisfactorily, making it difficult to obtain a gas barrier layer (II) with satisfactory gas barrier properties, whereas if the heat treatment time is too long, the productivity may deteriorate.

In the present invention, the comparatively short heat treatment described above enables the formation of cross-linked structures based on ester linkages between the polyalcohol-based polymer (A) and the polycarboxylic acid-based polymer (B), thereby enabling the formation of the gas barrier layer (II).

The thickness of the formed gas barrier layer (II) is preferably within a range from 0.05 to 3 $\mu$m, even more preferably from 0.05 to 2 $\mu$m, and is most preferably within a range from 0.08 to 1 $\mu$m. If the thickness of the gas barrier layer (II) is less than 0.05 $\mu$m, then forming a layer of uniform thickness becomes problematic. In contrast, if the thickness exceeds 3 $\mu$m, then the heat treatment time may lengthen, and there is a danger of a deterioration in the productivity.

The resin layer (III) is a layer that is formed on top of the gas barrier layer (II) using a resin coating material (F) that contains either a monovalent metal compound (D), or a monovalent metal compound (D) and a bivalent or higher metal compound (E). In other words, the resin coating material (F) comprises at least a monovalent metal compound (D). The resin layer (III) is preferably formed by applying the resin coating material (F) to the surface of the gas barrier layer (II), and subsequently conducting a heat treatment.

The monovalent metal compound (D), or the combination of the monovalent metal compound (D) and the bivalent or higher metal compound (E) within the resin layer (III) reacts with the polyalcohol-based polymer (A) or polycarboxylic acid-based polymer (B) within the gas barrier layer (II), forming cross-linked structures and therefore markedly improving the gas barrier properties of the laminate. The cross-linked structures formed by the reaction of the monovalent metal compound (D), or the monovalent metal compound (D) and the bivalent or higher metal compound (E), with the polyalcohol-based polymer (A) or the polycarboxylic acid-based polymer (B) may be coordination bonds, or the more obvious ionic or covalent bonds.

Examples of metals that may be used in the monovalent metal compound (D) include Li, Na, K, Rb and Se, of these, Li, Na and K are preferred, and of these, Li which has the smallest atomic radius, is the most desirable. The form of the metal compound used includes simple metals, as well as inorganic salts such as oxides, hydroxides, halides, carbonates and sulfates, and organic acid salts such as carboxylates and sulfonates. Of these, hydroxides and carbonates are preferred.

Monovalent metal salts have smaller atomic radii than bivalent metal salts, and penetrate more readily into the gas barrier layer (II). As a result, a satisfactory effect can be achieved simply by bringing a resin layer (III) comprising a monovalent metal salt into contact with the gas barrier layer (II) for a comparatively short period of time, which is particularly desirable.

Examples of the metal within the bivalent or higher metal compound (E) that is used in combination with the monovalent metal compound (D) include Mg, Ca, Zn, Cu, Co, Fe, Ni, Al, and Zr. Of these, Mg, Ca and Zn are preferred, and Mg and Ca are particularly desirable. The form of the metal compound used includes simple metals, as well as inorganic salts such as oxides, hydroxides, halides, carbonates and sulfates, and organic acid salts such as carboxylates and sulfonates. Of these, oxides, hydroxides and carbonates are preferred.

Mixing and using a combination of a monovalent metal compound (D) and a bivalent or higher metal compound (E) yields superior gas barrier properties to those obtained using solely a bivalent or higher metal compound (E), via an efficient and simple method. It is thought that the reason for this finding is that by using the bivalent or higher metal compound (E) in combination with a monovalent metal compound (D), the monovalent metal compound (D) penetrates more readily, meaning ionization between the carboxyl groups within the gas barrier layer (II) and the monovalent metal occurs preferentially, thereby improving the hydrophilicity, and that as a result, the bivalent or higher metal compound (E) is able to penetrate more readily into the gas barrier layer (II), thereby further enhancing the gas barrier properties of the layer.

These metal compounds may be used either alone, or in combinations of two or more different compounds, and for example, a plurality of compounds (D) and a plurality of compounds (E) may be used.

From the viewpoint of achieving superior transparency following film formation, the metal compound used is preferably in a finely powdered state at the time of mixing, and the average particle size is preferably not more than 10 $\mu$m, even more preferably not more than 3 $\mu$m, and is most preferably 1 $\mu$m or less.

In the present invention, these metal compounds are incorporated into the resin layer, and applied as a resin coating material, which is subsequently subjected to a heat treatment. By employing this method, superior gas barrier properties and transparency can be imparted to the laminate more easily, and in a more industrially efficient manner, than the case where the metal compound is applied as an aqueous solution and then subjected to a heat treatment. For example, by using a conventional coating apparatus equipped with a hot air drying oven, and simply applying the resin coating material (F) to the substrate film bearing the gas barrier layer (II), and then conducting a short heated-air drying process of not more than 1 minute, a laminate (laminated film) having excellent gas barrier properties can be obtained.

Examples of the resin used in forming the resin coating material (F) include conventional urethane resins, polyester resins, acrylic resins, epoxy resins, alkyd resins, melamine resins, and amino resins. Of these, from the viewpoints of the water resistance, solvent resistance, heat resistance and curing temperature, urethane resins, polyester resins and acrylic resins are preferred, and urethane resins are particularly desirable.

The resins may be used either alone, or in mixtures containing two or more different resins.

Urethane resins are polymers obtained, for example, by a reaction between a polyfunctional isocyanate and a hydroxyl group-containing compound, and specific examples of urethane resins that can be used include those obtained by the reaction between a polyfunctional isocyanate, such as an aromatic polyisocyanate such as tolylene diisocyanate, diphenylmethane isocyanate or polymethylene polyphenylene polyisocyanate, or an aliphatic polyisocyanate such as hexamethylene diisocyanate or xylene isocyanate, and a hydroxyl group-containing compound such as a polyether polyol, polyester polyol, polyacrylate polyol or polycarbonate polyol.

The blend ratio between the metal compound ((D), or (D) and (E)) and the resin within the resin coating material (F) varies considerably depending on factors such as the type of metal used, the form of the compound, and the type of resin used, but in terms of achieving favorable gas barrier properties for the laminate and enabling preparation of a uniform resin coating material (F), the quantity of the metal compound is preferably within a range from 0.1 to 100 parts by mass, and most preferably from 1 to 50 parts by mass, per 100 parts by mass of the resin solid fraction.

There are no particular restrictions on the method used for incorporating the metal compound within the resin coating material (F), and suitable methods include methods in which a solution containing the metal compound dissolved and/or dispersed within a solvent is mixed with another solution containing the resin component of the resin coating material (F) dissolved and/or dispersed within a solvent, and methods in which the resin and the metal compound are subjected to plastic mixing under heat, and subsequently used as a coating material. Of these, a method in which a solution containing the metal compound dissolved and/or dispersed therein is mixed with an emulsion containing the resin component of the resin coating material (F) dispersed within a solvent is preferred in terms of achieving comparatively uniform dispersion of the metal compound. In such a case, the solvent that functions as the emulsion medium is preferably capable of dissolving the metal compound to some extent, and for example, the use of water, an alcohol, or a mixture thereof is ideal.

Additives such as heat stabilizers, antioxidants, reinforcing materials, pigments, age resistors, weatherproofing agents, flame retardants, plasticizers, release agents, and lubricants may also be added to the resin coating material (F), provided such addition does not significantly impair the characteristics of the coating material.

Examples of the above heat stabilizers, antioxidants and age resistors include hindered phenols, phosphorus compounds, hindered amines, sulfur compounds, copper compounds, alkali metal halides, and mixtures thereof

Examples of reinforcing materials include clay, talc, calcium carbonate, zinc carbonate, wollastonite, silica, alumina, magnesium oxide, calcium silicate, sodium aluminate, sodium aluminosilicate, magnesium silicate, glass balloons, carbon black, zinc oxide, zeolite, hydrotalcite, metal fibers, metal whiskers, ceramic whiskers, potassium titanate whiskers, boron nitride, graphite, glass fiber, and carbon fiber.

A cross-linking agent may also be added to the resin coating material (F) to improve the water resistance and solvent resistance and the like of the formed resin layer (III) that is generated by applying the resin coating material (F) and then conducting a heat treatment. The quantity added of the cross-linking agent is preferably within a range from 0.1 to 300 parts by mass, even more preferably from 5 to 100 parts by mass, and most preferably from 10 to 80 parts by mass, per 100 parts by mass of the resin solid fraction contained within the resin coating material. If the quantity added of the cross-linking agent is less than 0.1 parts by mass, then the addition of the cross-linking agent yields no marked cross-linking effect compared with the case where no cross-linking agent is added, whereas if the quantity exceeds 300 parts by mass, then the cross-linking agent may actually impede the development of gas barrier properties, both of which are undesirable.

The above cross-linking agent may be a cross-linking agent with self cross-linking properties, a compound that contains a plurality of functional groups within each molecule capable of reacting with carboxyl groups and/or hydroxyl groups, or a metal complex with polyvalent coordination sites. Of these, isocyanate compounds, melamine compounds, urea compounds, epoxy compounds and carbodiimide compounds are preferred, and isocyanate compounds are particularly desirable. Specific examples include polyfunctional isocyanates including aromatic polyisocyanates such as tolylene diisocyanate, diphenylmethane isocyanate and polymethylene polyphenylene polyisocyanate, and aliphatic polyisocyanates such as hexamethylene diisocyanate and xylene isocyanate.

The concentration (the solid fraction) of the resin coating material (F) can be suitably adjusted in accordance with the specifications of the coating device, and/or the drying and heating device, although if the solution is overly dilute, then forming a layer, via reaction with the gas barrier layer (II), that is thick enough to ensure a satisfactory gas barrier property becomes difficult, and the subsequent drying process tends to require a long period of time. In contrast, if the concentration of the coating material (F) is too high, then achieving a homogenous coating material becomes difficult, and coatability problems tend to develop. Considering these factors, the concentration (the solid fraction) of the coating material (F) is preferably within a range from 5 to 50% by mass.

When forming the resin layer (III) from the resin coating material (F), a heat treatment may be conducted immediately following application of the coating material (F) to the formed gas barrier layer (II), thereby forming a dried coating and conducting a heat treatment simultaneously, or alternatively, the moisture and the like may be evaporated following application to first form a dried coating, by blowing hot air using a dryer or the like, or by irradiating infrared radiation, and a heat treatment then conducted subsequently. In terms of shortening the process, conducting the heat treatment immediately following coating is preferred, provided this does not impair the state of the gas barrier layer (II) and the resin layer (III) or the physical properties such as the gas barrier property. There are no particular restrictions on the heat treatment method, and although conducting the heat treatment in a dry atmosphere such as an oven is considered typical, the heat treatment may also be conducted, for example, by bringing the coating into contact with a heated roller.

The thickness of the resin layer (III) formed on top of the gas barrier layer (II) varies depending on the thickness of the gas barrier layer (II), but in order to ensure favorable gas barrier properties via reaction with the gas barrier layer (II), the thickness of the resin layer (III) is preferably thicker than 0.1 $\mu$m On the other hand, from the viewpoints of productivity and cost, the thickness is preferably not more than approximately 3 $\mu$m, and the thickness value is even more preferably within a range from 0.1 to 2 $\mu$m, and is most preferably from 0.15 to 1.5 $\mu$m.

There are no particular restrictions on the method used for applying the resin coating material (F), and typical methods such as gravure roll coating, reverse roll coating, wire bar coating and air knife coating can be used.

The heat treatment conditions are affected by factors such as the blend ratio between the metal compound ((D), or (D) and (E)) and the resin within the resin coating material (F), the existence of other added components, and the quantity of such added components if included, and although it is impossible to generalize regarding the ideal heat treatment temperature for forming the resin layer (III), the heat treatment is preferably conducted at a temperature within a range from 50 to 300°C, even more preferably from 70 to 250°C, and most preferably from 100 to 200°C. If the heat treatment temperature is too low, then the interaction between the metal compound within the resin coating material (F) and the polyalcohol-based polymer (A) and polycarboxylic acid-based polymer (B) within the gas barrier layer (II) may not proceed satisfactorily, making it difficult to obtain a laminate with satisfactory gas barrier properties. In contrast, if the heat treatment temperature is too high, then it is not preferable as there is a danger of wrinkling caused by film contraction, or coating brittleness.

From the viewpoint of productivity, the heat treatment time is preferably not longer than 5 minutes, is typically within a range from 1 second to 5 minutes, preferably from 3 seconds to 2 minutes, and even more preferably from 5 seconds to 1 minute. If the heat treatment time is too short, then the above interaction does not proceed satisfactorily, making it difficult to obtain a film with satisfactory gas barrier properties.

Following formation of the aforementioned resin layer (III) on top of the gas barrier layer (II) using the method described above, the laminate may be treated under a humid atmosphere in order to enhance the gas barrier properties of the laminate. Conducting a humidification treatment enables further acceleration of the interaction between the metal compound ((D), or (D) and (E)) of the resin layer (III) and the polyalcohol-based polymer (A) and polycarboxylic acid-based polymer (B) of the gas barrier layer (II). This humidification treatment may be conducted by leaving the laminate to stand in a high temperature, high humidity atmosphere, or by bringing the laminate into contact with water at a high temperature. The humidification treatment conditions vary depending on the purpose, but in those cases where the laminate is left to stand in a high temperature, high humidity atmosphere, a temperature of 30 to 130°C and a relative humidity of 50 to 100% are preferred. In those cases where the laminate is brought into contact with water at a high temperature, a temperature of approximately 30 to 130°C (under pressure for temperatures of 100°C or higher) is preferred. If the temperature is too low, then the effect of the humidification treatment is inadequate, whereas if the temperature is too high, the substrate may be subjected to heat damage, both of which are undesirable. The time for the humidification treatment varies depending on the treatment conditions, but is generally selected within a range from several seconds to several hundred hours.

In order to ensure that the metal compound contained within the resin layer (III) interacts effectively with the polyalcohol-based polymer (A) and the polycarboxylic acid-based polymer (B) contained within the gas barrier layer (II), it is important that the layers (II) and (III) are in mutual contact. Accordingly, the plastic substrate (I), the gas barrier layer (II) and the resin layer (III) must be laminated in the order (I) (II) (III). The fact that an anchor coat layer may be included between (I) and (II) is as described above.

The gas barrier laminate may also include other layers besides the essential layers (I), (II) and (III). For example, a protective layer (IV) comprising another resin layer may be formed on the surface of the resin layer (III) (the opposite surface to that which contacts the gas barrier layer (II)) for the purpose of protecting the resin layer (III), so that the layers are laminated in the order (I) (II) (III) (IV).
The protective layer (IV) is also effective in, for example, preventing bleed-out of metal salts from the resin layer (III), and preventing film blocking.

Examples of the protective layer (IV) include resin layers comprising a resin selected from amongst conventional polymers such as polyurethane resins, polyester resins and polyacrylic resins, which preferably exhibits excellent adhesion to the resin layer (III). Of these possibilities, coatings formed from polyurethane-based resins are particularly preferred. Moreover, in order to enhance the anti-blocking properties of this type of protective layer (IV), the glass transition point of the resin used is typically not less than 30°C, preferably not less than 70°C, and is most preferably 100°C or greater.
The protective layer (IV) may be cross-linked using a conventional cross-linking method for purposes such as improving the water resistance. Examples of the cross-linking method include methods that utilize self cross-linking via silanol linkages or the like, or methods involving the addition of a compound containing a plurality of groups within the molecule that react with the functional groups such as the carboxyl groups and hydroxyl groups contained within the resin used in the protective layer (IV). Of such compounds, isocyanate compounds, melamine compounds, urea compounds, epoxy compounds and carbodiimide compounds are preferred, and isocyanate compounds are particularly desirable. Specific examples include polyfunctional isocyanates including aromatic polyisocyanates such as tolylene diisocyanate, diphenylmethane isocyanate and polymethylene polyphenylene polyisocyanate, and aliphatic polyisocyanates such as hexamethylene diisocyanate and xylene isocyanate.
The protective layer (IV) may also include additives such as heat stabilizers, antioxidants, reinforcing materials, pigments, age resistors, weatherproofing agents, flame retardants, plasticizers, release agents and lubricants, provided such addition does not significantly impair the characteristics of the layer.
Alternatively, the gas barrier laminate may comprise a functional layer such as a primer layer or an antistatic layer on top of the resin layer (III).

The gas barrier laminate according to the present invention can be employed in all manner of fields that require oxygen gas barrier properties. For example, the laminate can be used favorably for all manner of packaging materials, and is particularly suited for packaging foodstuffs.
A packaging material comprising the gas barrier laminate may comprise other necessary layers in accordance with factors such as the intended application, including meltable resin layers (heat seal layers), adhesive layers or printing layers or the like.

EXAMPLES

As follows is a description of specifics of the present invention, based on a series of examples and comparative examples, although the present invention is not limited solely to these examples.

In the following examples and comparative examples, the oxygen gas barrier property was evaluated by measuring the oxygen permeability under an atmosphere at a temperature of 20°C and a relative humidity of 85%, using an oxygen barrier measurement device (OX-TRAN 2/20) manufactured by Mocon, Inc. Using the measured results for the oxygen permeability of the gas barrier laminate and the substrate, the oxygen permeability of the formed layers comprising the gas barrier layer (II) and the resin layer (III) was calculated using the following formula.

$$1/P_{total} = 1/P_I + 1/P_{II+III}$$

In this formula,

$P_{total}$ (a measured value) : the oxygen permeability of the gas barrier laminate (the laminated film)
$P_I$ (a measured value) : the oxygen permeability of the plastic substrate (I)
$P_{II+III}$ (a calculated value) : the oxygen permeability of the formed layers comprising the gas barrier layer (II) and the resin layer (III)

The external appearance of the laminate was judged visually, wherein a transparent laminate was evaluated as A, and a laminate with external appearance faults such as whitening was evaluated as D.

<Example 1>

A polyvinyl alcohol (Poval 105, manufactured by Kuraray Co., Ltd., (saponification degree: 98 to 99%, average polymerization degree: 500) was dissolved in hot water, and then cooled to room temperature, thus forming a PVA aqueous solution with a solid fraction of 10% by mass. In a separate preparation, 10 mol% of the carboxyl groups of an ethylene-maleic anhydride copolymer (weight average molecular weight: 100,000, maleic acid units: 45 to 50%) were neutralized with sodium hydroxide, and a further 2 mol% of the carboxyl groups were neutralized with magnesium hydroxide, thus forming an EMA aqueous solution with a solid fraction of 10% by mass.
The PVA aqueous solution and EMA aqueous solution were mixed together in quantities that yielded a mass ratio of PVA to EMA of 40/60, thus yielding a mixed solution (a gas barrier layer-forming coating material (C)) with a solid fraction of 10% by mass.
An aqueous dispersion of a polyurethane resin A (Superflex 410, manufactured by Dai-ichi Kogyo Seiyaku Co., Ltd.) with a solid fraction of 20% by mass, and a 3% by mass aqueous solution of lithium hydroxide (prepared by stirring for approximately 30 minutes at 100 rpm using a magnetic stirrer) were mixed together in equal quantities by mass, yielding a mixed solution (a resin coating material (F)) with a final resin solid fraction concentration of 10% by mass and a lithium hydroxide concentration of 1.5% by mass.
Using a gravure roll coater, the above gas barrier layer-forming coating material (C) was applied to the surface of a biaxially stretched nylon 6 film (Emblem, manufactured by Unitika, Ltd., thickness: 15 μm) secured to a 300 mm x 300 mm metal frame. The coating material was dried at 80°C for 2 minutes, and then subjected to further drying and a heat treatment for 20 seconds in an atmosphere at 200°C, thus forming a gas barrier layer (II) with a thickness of 0.5 μm.
Subsequently, the above resin coating material (F) was applied to the gas barrier layer (II) using a gravure roll coater, and the coating material was subjected to drying and a heat treatment for 30 seconds in a hot-air dryer at 130°C, thereby forming a resin layer (III) with a thickness of 0.8 μm, and completing preparation of a laminate (a gas barrier laminate).

<Example 2>

With the exception of altering the lithium hydroxide concentration in the resin coating material (F) to 0.75% by mass, a laminate was prepared in the same manner as the example 1.

<Example 3>

With the exception of altering the monovalent metal compound (D) contained in the resin coating material (F) to sodium hydroxide, a laminate was prepared in the same manner as the example 1.

<Example 4>

With the exception of altering the monovalent metal compound (D) contained in the resin coating material (F) to sodium hydroxide, a laminate was prepared in the same manner as the example 2.

<Example 5>

With the exception of altering the monovalent metal compound (D) contained in the resin coating material (F) to potassium hydroxide, a laminate was prepared in the same manner as the example 1.

<Example 6>

With the exception of altering the monovalent metal compound (D) contained in the resin coating material (F) to potassium hydroxide, a laminate was prepared in the same manner as the example 2.

<Example 7>

With the exceptions of using lithium hydroxide as the monovalent metal compound (D) and calcium carbonate as a bivalent or higher metal compound (E) within the resin coating material (F), and setting the lithium hydroxide concentration to 1.5% by mass and the calcium carbonate concentration to 1.5% by mass, a laminate was prepared in the same manner as the example 1.

<Example 8>

With the exception of altering the bivalent or higher metal compound (E) contained in the resin coating material (F) to magnesium carbonate, a laminate was prepared in the same manner as the example 7.

<Example 9>

With the exception of altering the bivalent or higher metal compound (E) contained in the resin coating material (F) to zinc oxide, a laminate was prepared in the same manner as the example 7.

<Example 10>

With the exception of altering the resin coating material (F) to a mixed solution prepared by mixing equal quantities by mass of a MEK (methyl ethyl ketone) / toluene = 50/50 (mass ratio) dispersion of a urethane resin B (Takelac E755, manufactured by Mitsui Chemicals Polyurethanes, Inc.) with a solid fraction of 20% by mass, and a 3% by mass IPA (isopropyl alcohol) / toluene = 40/60 (mass ratio) dispersed suspension of lithium hydroxide, so that the final resin solid fraction concentration was 10% by mass and the final lithium hydroxide concentration was 1.5% by mass, a laminate was prepared in the same manner as the example 1.

<Example 11>

With the exception of altering the lithium hydroxide concentration in the resin coating material (F) to 0.75% by mass, a laminate was prepared in the same manner as the example 10.

<Example 12>

With the exceptions of using lithium hydroxide as the monovalent metal compound (D) and magnesium carbonate as a bivalent or higher metal compound (E) within the resin coating material (F), and setting the lithium hydroxide concentration to 1.5% by mass and the magnesium carbonate concentration to 1.5% by mass, a laminate was prepared in the same manner as the example 10.

<Example 13>

With the exception of altering the resin component of the resin coating material (F) from the urethane resin A to an ester resin A (Elitel KA5071S, manufactured by Unitika, Ltd.), a laminate was prepared in the same manner as the example 1.

<Example 14>

With the exception of altering the lithium hydroxide concentration in the resin coating material (F) to 0.75% by mass, a laminate was prepared in the same manner as the example 13.

<Example 15>

With the exception of altering the resin component of the resin coating material (F) from the urethane resin B to an ester resin B (Elitel UE9820, manufactured by Unitika, Ltd.), a laminate was prepared in the same manner as the example 10.

<Example 16>

With the exception of altering the lithium hydroxide concentration in the resin coating material (F) to 0.75% by mass, a laminate was prepared in the same manner as the example 15.

<Example 17>

With the exception of altering the resin component of the resin coating material (F) from the urethane resin A to an acrylic resin (Joncryl 711, manufactured by Johnson Polymer Inc.), a laminate was prepared in the same manner as the example 1.

<Example 18>

With the exception of altering the resin component of the resin coating material (F) from the urethane resin A to an acrylic resin (Joncryl 711, manufactured by Johnson Polymer Inc.), a laminate was prepared in the same manner as the example 2.

<Example 19>

With the exception of altering the mass ratio between the PVA aqueous solution and the EMA aqueous solution within the gas barrier layer-forming coating material (C) to 30/70, a laminate was prepared in the same manner as the example 1.

<Example 20>

With the exception of altering the mass ratio between the PVA aqueous solution and the EMA aqueous solution within the gas barrier layer-forming coating material (C) to 30/70, a laminate was prepared in the same manner as the example 2.

<Example 21>

With the exception of altering the mass ratio between the PVA aqueous solution and the EMA aqueous solution within the gas barrier layer-forming coating material (C) to 30/70, a laminate was prepared in the same manner as the example 8.

<Example 22>

With the exception of altering the mass ratio between the PVA aqueous solution and the EMA aqueous solution within the gas barrier layer-forming coating material (C) to 30/70, a laminate was prepared in the same manner as the example 10.

<Example 23>

With the exception of altering the lithium hydroxide concentration in the resin coating material (F) to 0.75% by mass, a laminate was prepared in the same manner as the example 22.

<Example 24>

With the exceptions of using lithium hydroxide as the monovalent metal compound (D) and magnesium carbonate as a bivalent or higher metal compound (E) within the resin coating material (F), and setting the lithium hydroxide concentration to 1.5% by mass and the magnesium carbonate concentration to 1.5% by mass, a laminate was prepared in the same manner as the example 22.

<Comparative Example 1>

With the exception of not adding the metal compound to the resin coating material (F), a laminate was prepared in the same manner as the example 1.

<Comparative Example 2>

With the exception of replacing the resin coating material (F) with a 1.5% by mass aqueous solution of lithium hydroxide containing no resin component, a laminate was prepared in the same manner as the example 1. Solid deposits of lithium hydroxide were visible on the surface of the resulting laminate, and the external appearance was unsatisfactory:

<Comparative Example 3>

With the exception of altering the metal compound mixed into the resin coating material (F) to 1.5% by mass of magnesium oxide, a laminate was prepared in the same manner as the example 1. Aggregates of magnesium oxide were observed within the resulting laminate, and the external appearance was unsatisfactory.

<Comparative Example 4>

With the exception of altering the mass ratio between the PVA aqueous solution and the EMA aqueous solution within the gas barrier layer-forming coating material (C) to 30/70, a laminate was prepared in the same manner as the comparative example 1.
The results of measuring the oxygen permeability for the laminates and the formed layers (gas barrier layer (II) + resin layer (III)) obtained in each of the above examples and comparative examples, and the results of visually evaluating the external appearance, are shown in Table 1.
[Table 1]

| | Gas barrier layer (II) | Resin layer (III) | | | | | Oxygen gas permeability | | External appearance |
|---|---|---|---|---|---|---|---|---|---|
| | (A)/(B) PVA/EMA | Resin component | Monovalent metal compound (D) | | Bivalent or higher metal compound (E) | | Laminate (Ptotal) | Gas barrier layer (II) + Resin layer (III) (PII+ III) | External appearance |
| | | | Compound | Parts by mass (Note 1) | Compound | Parts by mass (Note 1) | (m1/m2·day·MPa) | | |
| Example 1 | 40/60 | Urethane resin A | LiOH | 15 | - | - | 10.6 | 10.9 | A |
| Example 2 | | | | 7.5 | - | - | 18.2 | 19.1 | A |
| Example 3 | | | NaOH | 15 | - | - | 20.5 | 21.6 | A |
| Example 4 | | | | 7.5 | - | - | 22.8 | 24.2 | A |
| Example 5 | | | KOH | 15 | - | - | 30.3 | 32.8 | A |
| Example 6 | | | | 7.5 | - | - | 38.2 | 42.2 | A |
| Example 7 | | | LiOH | 15 | CaCO3 | 15 | 5.6 | 5.7 | A |
| Example 8 | | | | | MgCO3 | 15 | 4.8 | 4.9 | A |
| Example 9 | | | | | ZnO | 15 | 10.3 | 10.6 | A |
| Example 10 | | Urethane resin B | LiOH | 15 | - | - | 25.0 | 26.7 | A |
| Example 11 | | | | 7.5 | - | - | 37.1 | 40.9 | A |
| Example 12 | | | | 15 | MgCO3 | 15 | 15.2 | 15.8 | A |
| Example 13 | | Ester resin A | LiOH | 15 | - | - | 11.1 | 11.4 | A |
| Example 14 | | | | 7.5 | - | - | 18.5 | 19.4 | A |
| Example 15 | | Ester resin B | LiOH | 15 | - | - | 25.2 | 26.9 | A |
| Example 16 | | | | 7.5 | - | - | 40.1 | 44.6 | A |
| Example 17 | | Acrylic resin | LiOH | 15 | 15 - | - | 20.3 | 21.4 | A |
| Example 18 | | | | 7.5 | - | - | 25.4 | 27.1 | A |

EP 1 930 153 B1

| | Gas barrier layer (II) | Resin layer (III) | | | | | Oxygen gas permeability | | External appearance |
|---|---|---|---|---|---|---|---|---|---|
| | (A)/(B) PVA/EMA | Resin component | Monovalent metal compound (D) | | Bivalent or higher metal compound (E) | | Laminate (Ptotal) | Gas barrier layer (II) + Resin layer (III) (PII+ III) | External appearance |
| | | | Compound | Parts by mass (Note 1) | Compound | Parts by mass (Note 1) | (m1/m2·day·MPa) | | |
| Example 19 | 30/70 | Urethane resin A | LiOH | 15 | - | - | 7.8 | 8.0 | A |
| Example 20 | | | | 7.5 | - | - | 10.3 | 10.6 | A |
| Example 21 | | | | 15 | MgCO3 | 15 | 4.0 | 4.0 | A |
| Example 22 | | Urethane resin B | LiOH | 15 | - | - | 22.7 | 24.1 | A |
| Example 23 | | | | 7.5 | - | - | 33.4 | 36.4 | A |
| Example 24 | | | | 15 | MgCO3 | 15 | 12.6 | 13.0 | A |
| Comparative example 1 | 40/60 | Urethane resin A | - | - | - | - | 163.2 | 275.7 | A |
| Comparative example 2 | | - | LiOH | 15 | - | - | 13.3 | 13.8 | D |
| Comparative example 3 | | Urethane resin A | - | - | MgO | 15 | 100.1 | 133.5 | D |
| Comparative example 4 | 30/70 | Urethane resin A | - | - | - | - | 160.8 | 268.9 | A |
| (Note 1): Quantity relative to 100 parts by mass of the resin solid fraction | | | | | | | | | |

The gas barrier laminates obtained in the above examples all exhibited favorable gas barrier properties, and were also transparent with a favorable external appearance. In contrast, in the comparative examples 1, 3 and 4, because the resin layer (III) did not include the monovalent metal compound (D), satisfactory gas barrier properties could not be achieved. Moreover, in the comparative example 3, because the resin layer (III) did not include the monovalent metal compound (D), the penetration of the bivalent or higher metal compound (E) into the gas barrier layer (II) was slow, causing external appearance defects. In the comparative example 2, the use of the monovalent metal compound (D) meant that the gas barrier properties were favorable, but because a resin layer (III) containing a resin was not employed, the external appearance deteriorated.

**Claims**

1. A gas barrier laminate comprising:

   a plastic substrate (I);
   a gas barrier layer (II) formed from a gas barrier layer-forming coating material (C) containing a polyalcohol-based polymer (A) and a polycarboxylic acid-based polymer (B); and
   a resin layer (III) formed from a resin coating material (F) containing either a monovalent metal compound (D), or a monovalent metal compound (D) and a bivalent or higher metal compound (E); wherein
   the gas barrier layer (II) is laminated to the plastic substrate (I), either directly or with an anchor coat layer disposed therebetween, and the resin layer (III) is laminated on top of the gas barrier layer (II), and wherein the polycarboxylic acid-based polymer (B) comprises an olefin-maleic acid copolymer.

2. The gas barrier laminate according to claim 1, wherein the polyalcohol-based polymer (A) comprises a polymer selected from the group consisting of polyvinyl alcohol, copolymers of ethylene and vinyl alcohol, and sugars.

3. The gas barrier laminate according to claim 1 or 2, wherein the olefin-maleic acid copolymer is an ethylene-maleic acid copolymer.

4. The gas barrier laminate according to any one of claims 1 through 3, wherein the monovalent metal compound (D) comprises at least one metal selected from the group consisting of Li, Na, and K.

5. The gas barrier laminate according to any one of claims 1 through 4, wherein the bivalent or higher metal compound (E) comprises at least one metal selected from the group consisting of Mg, Ca, and Zn.

6. A packaging material comprising the gas barrier laminate according to any one of claims 1 through 5.

**Patentansprüche**

1. Gas-Barriere-Laminat, umfassend

   - ein Kunststoff-Substrat (I);
   - eine Gas-Barriere-Schicht (II), die aus einem eine Gas-Barriere-Schicht bildenden Beschichtungs-Material (C) gebildet ist, das ein Polymer (A) auf Polyalkohol-Basis und ein Polymer (B) auf Polycarbonsäure-Basis enthält; und
   - eine Harz-Schicht (III), die aus einem Harz-Beschichtungs-Material (F) gebildet ist, das entweder eine Verbindung (D) eines einwertigen Metalls oder eine Verbindung (D) eines einwertigen Metalls und eine Verbindung (E) eines zweiwertigen oder höherwertigen Metalls enthält; worin
   - die Gas-Barriere-Schicht (II) auf das Kunststoff-Substrat (I) laminiert ist, und zwar entweder direkt oder mit einer dazwischen angeordneten Anker-Beschichtungs-Schicht, und die Harz-Schicht (III) oben auf die Gas-Barriere-Schicht (II) laminiert ist; und worin
   - das Polymer (B) auf Polycarbonsäure-Basis ein Olefin-Maleinsäure-Copolymer umfaßt.

2. Gas-Barriere-Laminat nach Anspruch 1, worin das Polymer (A) auf Polyalkohol-Basis ein Polymer umfaßt, das gewählt ist aus der Gruppe, die besteht aus Polyvinylalkohol, Copolymeren aus Ethylen und Vinylalkohol und Zukkern.

3. Gas-Barriere-Laminat nach Anspruch 1 oder 2, worin das Olefin-Maleinsäure-Copolymer ein Ethylen-Maleinsäure-Copolymer ist.

4. Gas-Barriere-Laminat nach irgendeinem der Ansprüche 1 bis 3, worin die Verbindung (D) des einwertigen Metalls wenigstens ein Metall umfaßt, das gewählt ist aus der Gruppe, die besteht aus Li, Na und K.

5. Gas-Barriere-Laminat nach irgendeinem der Ansprüche 1 bis 4, worin die Verbindung (E) des zweiwertigen oder höherwertigen Metalls wenigstens ein Metall umfaßt, das gewählt ist aus der Gruppe, die besteht aus Mg, Ca und Zn.

6. Verpackungs-Material, umfassend das Gas-Barriere-Laminat nach irgendeinem der Ansprüche 1 bis 5.


**Revendications**

1. Stratifié faisant office de barrière aux gaz, comprenant :

   un substrat en plastique (I) ;
   une couche formant barrière aux gaz (II) formée à partir d'un matériau de revêtement formant couche formant barrière aux gaz (C) contenant un polymère à base d'un polyalcool (A) et un polymère à base de polyc(acidecarboxylique) (B) ; et
   une couche de résine (III) formée à partir d'un matériau de revêtement résinique (F) contenant, soit un composé métallique monovalent (D), soit un composé métallique monovalent (D) et un composé métallique bivalent ou supérieur (E) ; dans lequel
   la couche formant barrière aux gaz (II) est stratifiée sur le substrat en plastique (I), soit directement, soit avec une couche de revêtement d'ancrage disposée entre les deux, et la couche de résine (III) étant stratifiée sur le dessus de la couche formant barrière aux gaz (II) ; et dans lequel
   le polymère (B) à base d'acide polycarboxylique comprend un copolymère d'oléfine-acide maléique.

2. Stratifié formant barrière aux gaz selon la revendication 1, dans lequel le polymère à base d'un polyalcool (A) comprend un polymère choisi parmi le groupe constitué du poly(alcool de vinyle), des copolymères d'éthylène et d'alcool de vinyle, et des sucres.

3. Stratifié formant barrière aux gaz selon la revendication 1 ou 2, dans lequel le copolymère d'oléfine-acide maléique est un copolymère d'éthylène-acide maléique.

4. Stratifié formant barrière aux gaz selon l'une quelconque des revendications 1 à 3, dans lequel le composé métallique monovalent (D) comprend au moins un métal choisi parmi le groupe constitué de Li, Na et K.

5. Stratifié formant barrière aux gaz selon l'une quelconque des revendications 1 à 4, dans lequel le composé métallique bivalent ou supérieur (E) comprend au moins un métal choisi parmi le groupe constitué de Mg, Ca et Zn.

6. Matériau d'emballage comprenant le stratifié formant barrière aux gaz selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1086981 A1
- EP 1548074 A2
- JP 2004322625 A
- US 2003124365 A1
- JP 2004315586 A
- JP 2004136281 A
- JP H06220221 B
- JP H07102083 B
- JP H07205379 B
- JP H07266441 B

- JP H08041218 B
- JP H10237180 B
- JP 2000000931 A
- JP 2001323204 A
- JP 2002020677 A
- JP 2002241671 A
- JP 2004115776 A
- JP 2004137495 A
- JP 2004322626 A
- JP H02149415 B